# FASCICULE DE BREVET EUROPEEN

(11) **EP 2 477 841 B1**
(45) Date de publication et mention de la délivrance du brevet: **02.10.2013**
(21) Numéro de dépôt: 10734276.8
(22) Date de dépôt: 18.06.2010
(51) Int. Cl.: B60N 2/28, B60N 2/30, B60R 7/04

(54) **SIÈGE DE VÉHICULE AUTOMOBILE COMPORTANT UN ÉLÉMENT D'ASSISE APTE À FORMER UN ESPACE DE RANGEMENT**
KRAFTFAHRZEUGSITZ MIT EINEM SITZTEIL DAS ZUM BILDEN EINES STAURAUMES GEEIGNET IST
MOTOR VEHICLE SEAT COMPRISING SEAT PORTION ELEMENT CAPABLE OF FORMING A STOWAGE SPACE

(30) Priorité: 15.09.2009 FR 0956339
(43) Date de publication de la demande: 25.07.2012
(73) Titulaire: Renault S.A.S., 92100 Boulogne-Billancourt (FR)
(72) Inventeur: LEBOINE, Francois, F-75017 Paris (FR)
(86) Numéro de dépôt international: PCT/FR2010/051236
(87) Numéro de publication internationale: WO 2011/033197

(56) Documents cités:
- WO-A1-01/05620
- DE-A1-102008 045 859
- DE-U1- 9 412 066
- FR-A1- 2 724 606
- FR-A1- 2 896 732

## Description

La présente invention se rapporte à un siège de véhicule automobile.

Le document FR 2 724 606 A1 décrit un siège de véhicule automobile qui comporte un élément d'assise, lequel est monté pivotant sur le plancher, au niveau de son bord arrière. En position d'utilisation, l'élément d'assise présente une surface d'assise horizontale et deux creux, l'un ménagé dans le plancher et l'autre dans l'élément d'assise, permettent de former un espace de rangement, sous l'élément d'assise. Un rehausseur pour enfant peut être stocké dans cet espace de rangement. En soulevant l'élément d'assise, il est possible, soit de stocker le rehausseur dans l'espace de rangement précité, soit de l'en retirer pour son utilisation sur l'élément d'assise. Le rehausseur doit, lors de son utilisation, être posé sur la surface d'assise de l'élément d'assise. Il permet, de par son épaisseur, de surélever un passager enfant, de manière à ce qu'il puisse être correctement maintenu sur le siège, par la sangle de la ceinture de sécurité.

L'espace de rangement précité est fort restreint et ne peut servir au transport de bagages ou autre, que lorsque le rehausseur est utilisé sur l'assise.

Le document DE 10 2008 045 859 A1 comporte un élément d'assise présentant une surface d'assise et qui est adapté à être monté sur le plancher d'un véhicule automobile, ledit élément d'assise comportant deux flancs latéraux qui sont reliés par ladite surface d'assise et qui comportent chacun un bord libre, et où, dans une première position d'utilisation, lesdits bords libres sont disposés au dessus de ladite surface d'assise.

La présente invention a pour but de proposer un nouveau siège de véhicule automobile qui permet de stocker des bagages ou autre.

Ce but est atteint au moyen d'un siège de véhicule automobile comportant un élément d'assise, qui présente une surface d'assise et qui est adapté à être monté sur le plancher d'un véhicule automobile, ledit élément d'assise comportant deux flancs latéraux qui sont reliés par ladite surface d'assise et qui comportent chacun un bord libre et où, dans une première position d'utilisation dudit élément d'assise, lesdits bords libres sont disposés au-dessus de ladite surface d'assise. Selon l'invention, dans une seconde position d'utilisation, lesdits bords libres sont disposés au-dessous de ladite surface d'assise, de manière à surélever ladite surface d'assise par l'intermédiaire desdits flancs latéraux.

Le fait de surélever la surface d'assise permet de former un espace de rangement sous la surface d'assise de l'élément d'assise. Les flancs latéraux servent de moyens d'appui pour surélever la surface d'assise.

Selon un mode de réalisation, lesdits bords libres sont aptes à coopérer dans ladite première et ladite seconde position avec le bord d'une ouverture ménagée dans ledit plancher. Dans la première position, la surface d'assise peut ainsi être disposée dans ou sous l'ouverture, ce qui minimise l'encombrement du siège.

Avantageusement, dans ladite seconde position d'utilisation, ledit élément d'assise peut former un rehausseur. Ainsi, en plus du rangement qu'il forme, l'élément d'assise peut aussi servir à asseoir un enfant de manière à ce qu'il soit maintenu correctement par la ceinture de sécurité destinée au siège de l'invention.

A cet effet, ledit élément d'assise peut comporter une surface d'assise complémentaire, disposée en regard de ladite surface d'assise et des moyens de guidage de la sangle d'une ceinture de sécurité, afin de la maintenir en position sur les cuisses du passager enfant assis sur la surface d'assise complémentaire.

Selon une variante, ledit élément d'assise comprend deux flancs latéraux complémentaires qui s'étendent de part et d'autre de ladite surface d'assise complémentaire et au-dessus de ladite surface d'assise complémentaire, lorsque ledit élément d'assise est disposé dans ladite seconde position d'utilisation.

Selon cette variante, les moyens de guidage de la sangle d'une ceinture de sécurité peuvent être formés au niveau des flancs latéraux complémentaires.

Les deux flancs complémentaires permettent avantageusement de former des accoudoirs et assurent en outre un bon maintien de l'enfant sur la surface d'assise complémentaire.

Selon un mode de réalisation, ledit élément d'assise comporte une paroi arrière, sensiblement perpendiculaire à ladite surface d'assise et formant dossier dans ladite première position d'utilisation.

Le siège de l'invention peut également comporter des moyens de blocage dudit élément d'assise pour bloquer ledit élément d'assise dans l'une ou l'autre de ses positions d'utilisation.

La présente invention, ses caractéristiques et les différents avantages qu'elle procure seront mieux compris à la lecture de la description qui suit de trois modes de réalisation, présentés à titre d'exemples non limitatifs, et qui fait référence aux dessins annexés, sur lesquels :
- la Figure 1 représente une vue en perspective d'un premier mode de réalisation du siège de l'invention, l'élément d'assise étant monté dans la première position d'utilisation ;
- la Figure 2 représente une vue en perspective du plancher et d'une portion du siège de l'invention, l'élément d'assise ayant été retiré ;
- la Figure 3 représente une vue en perspective du siège de la Figure 1, l'élément d'assise étant disposé dans la seconde position d'utilisation ;
- la Figure 4 représente un second mode de réalisation de l'élément d'assise du siège selon l'invention ; et
- la Figure 5 représente un troisième mode de réalisation de l'élément d'assise du siège selon l'invention.

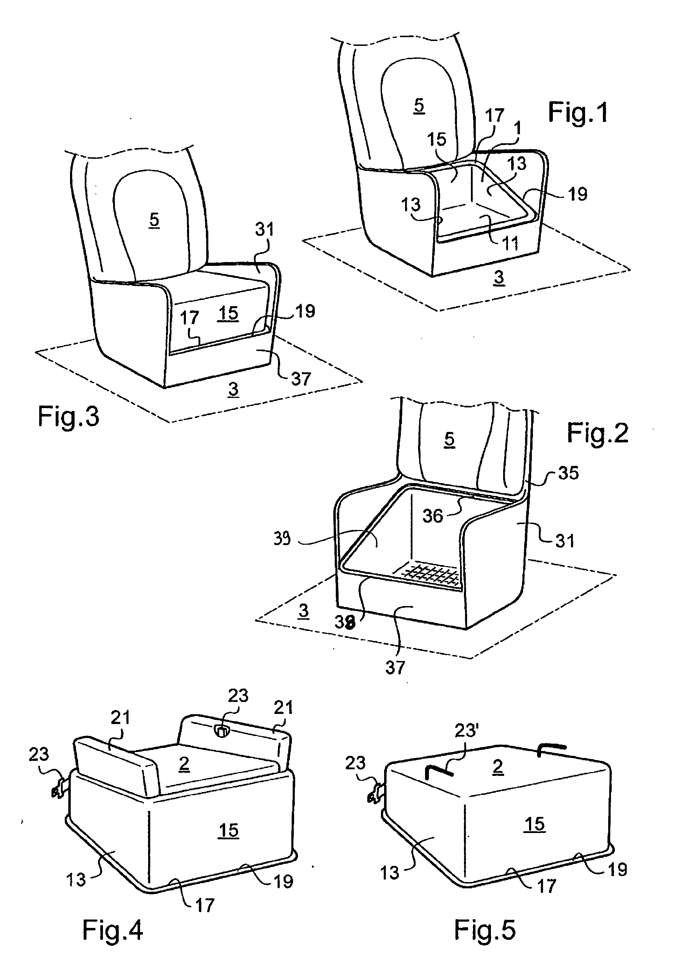

Comme représenté sur la Figure 1, le siège selon l'invention comporte un élément d'assise 1 qui est amovible et monté sur un plancher 3, et un dossier 5 qui est sensiblement perpendiculaire à l'élément d'assise 1. L'élément d'assise 1 comporte une surface d'assise 11, deux flancs latéraux 13 qui sont reliés par la surface d'assise 11 et une paroi arrière 15 qui coopère avec le dossier 5 au niveau de la portion basse de ce dernier. Cette paroi arrière 15 forme une portion du dossier au niveau du bas du dos du passager. La paroi arrière 15 est reliée à la surface d'assise 11 et à chacun des flancs latéraux 13 de manière à former une paroi continue qui s'étend sensiblement perpendiculairement à la surface d'assise 11. Dans la première position d'utilisation qui est représentée sur la Figure 1, la surface d'assise 11 est disposée sensiblement horizontalement dans le véhicule et la paroi arrière 15 et les flancs latéraux 13 s'étendent donc verticalement. Chacun des flancs 13 et la paroi arrière 15 présente un bord libre 17 qui comporte une bande ou bordure 19 qui s'étend parallèlement à la surface d'assise 11 et qui est dirigée à l'opposée de la surface d'assise 11, vers l'extérieur de l'élément d'assise 1.

Comme représenté sur les Figures 1 et 2, le plancher 3 forme un socle 31 dans lequel est monté l'élément d'assise 1. Ce socle 31 comporte une ouverture 39, qui s'étend sensiblement dans un plan horizontal. En arrière de l'ouverture 39, le socle 31 comporte une portion arrière 35, sensiblement verticale, qui est plus haute que la surface moyenne du plancher 3. La portion avant 37 du socle 31, qui est située en avant de l'ouverture 39, est sensiblement verticale et plus basse que la portion arrière 35. La portion arrière 35 est disposée sous le dossier 5 ou peut même s'étendre verticalement de manière à former le dossier 5. Dans la première position d'utilisation, comme représenté sur la Figure 1, la surface d'assise 11 est disposée en dessous des bords libres 17, lesquels coopèrent par l'intermédiaire de la bordure 19, avec le bord de l'ouverture 39 ménagée dans le socle 31. La surface d'assise 11 se trouve ainsi dans le socle 31 et donc localement en dessous de la surface du plancher 3. Les flancs latéraux 13 et la paroi arrière 15 relient la surface d'assise 11 au socle 31 de manière à former un baquet d'assise creux dans lequel l'utilisateur peut s'asseoir, sur la surface d'assise 11.

Comme représenté sur la Figure 2, l'ouverture 39 présente sensiblement la forme de la surface d'assise 11. Sous cette ouverture 39 sont par exemple disposés le moteur électrique et la batterie d'alimentation de ce moteur. Ces éléments peuvent être recouverts d'un carter ou autre. Le socle 31 définit ainsi un logement de rangement qui s'étend sous l'ouverture 39 et en arrière de celle-ci, dans la portion du socle 31, située sous le dossier 5. Ce logement est restreint et accessible en retirant l'élément d'assise 1.

Comme représenté sur la Figure 2, le périmètre de l'ouverture 39 comporte une bande d'appui 38 qui s'étend vers le centre de l'ouverture 39, sur une largeur limitée et qui est apte à coopérer avec la bordure 19 de l'élément d'assise 1. Cette bande d'appui 38 est légèrement plus basse que le bord de l'ouverture 39 de sorte que, dans la première et dans la seconde position d'utilisation, la tranche de la bordure 19 vient en butée contre la surface verticale qui relie le bord de l'ouverture 39 à la bande d'appui 38. Au niveau de la portion arrière 35 du socle 31, la bande d'appui 38 forme la surface inférieure d'une rainure horizontale dans laquelle vient se loger la bordure 19.

La Figure 3 représente le siège de l'invention, lorsque l'élément d'assise 1 est dans la seconde position d'utilisation. L'élément d'assise 1 est retourné et la surface d'assise 11 est orientée vers l'ouverture 39 du socle 31. Il est alors possible de loger dans l'espace de rangement accessible par l'ouverture 39, un objet volumineux, par exemple, une valise, qui dépasse hors de l'ouverture 39 et qui est recouvert, à la manière d'un couvercle par l'élément d'assise 1.

Comme représenté sur la Figure 3, lorsque l'élément d'assise 1 est dans la seconde position d'utilisation, la paroi arrière 15 vient se placer au niveau de la portion avant 37 du socle 31. L'élément d'assise 1 forme donc un couvercle pour le logement de rangement. Dans la seconde position d'utilisation, les bords libres 17 sont disposés vers le bas et sont en appui, par l'intermédiaire de la bordure 19, sur la bande d'appui 38 ; la surface d'assise 11 est disposée au-dessus des bords libres 17. La portion de la bordure 19 située au niveau du bord avant de l'élément d'assise 1 (par opposition à la paroi arrière 15 de ce dernier) est logée dans la rainure précitée qui est située au niveau de la portion arrière 35 du socle 31. Du fait de la forme de l'élément d'assise 1 qui comporte les deux flancs 13 de hauteur variable (de hauteur croissante vers la paroi arrière 15) et la paroi arrière 15, lorsque l'élément d'assise 1 est disposé dans sa seconde position, la surface d'assise 11 reste sensiblement horizontale mais retournée vers l'ouverture 39.

Comme représenté sur la Figure 4, l'élément d'assise 1 peut former un rehausseur. La surface 2 de l'élément d'assise 1 qui est en regard de la surface d'assise 11 est qui est disposée sur le dessus dans la seconde position d'utilisation, peut être utilisée comme une surface d'assise complémentaire. Cette surface d'assise complémentaire 2 est plus haute que la surface d'assise 11 dans la première position d'utilisation, ce qui permet d'y asseoir un enfant.

Les Figures 4 et 5 représentent des modes de réalisation particuliers dans lesquels l'élément d'assise 1 forme un rehausseur lorsqu'il est monté dans la seconde position d'utilisation.

Comme illustré dans le mode de réalisation de la Figure 5, l'élément d'assise comporte une surface d'assise complémentaire 2, disposée en regard de la surface d'assise 11 et des moyens de guidage 23' de la sangle d'une ceinture de sécurité, afin de la maintenir en position sur les cuisses du passager enfant assis sur la surface d'assise complémentaire. Ces moyens de guidage sont constitués d'une simple languette ou d'un fil.

Dans le mode de réalisation particulier représenté sur la Figure 4, l'élément d'assise 1 comporte des flancs latéraux complémentaires 21 qui sont sensiblement parallèles aux flancs latéraux 13 mais s'étendent dans la direction opposée, c'est-à-dire au dessus de la surface d'assise complémentaire 2. Ces flancs latéraux complémentaires 21 comportent chacun des moyens de guidage de la sangle d'une ceinture de sécurité 23, qui se présente ici sous la forme d'une languette.

Lorsque l'élément d'assise 1 est monté dans sa seconde position d'utilisation, comme représenté sur les Figures 4 et 5, les mollets de l'enfant assis sur la surface d'assise complémentaire 2 sont disposés le long de la paroi arrière 15 de l'élément d'assise 1. La sangle de la ceinture de sécurité 23 est glissée dans les moyens de guidage 23', de manière à être tendue préférentiellement sur les cuisses de l'enfant, plutôt que sur son abdomen.

La bordure 19 venant en butée contre la surface verticale située en dessous du bord de l'ouverture 39 permet d'éviter tout mouvement intempestif de l'élément d'assise 1 dans l'une et l'autre de ses positions d'utilisation.

Selon une variante non représentée, l'élément d'assise 1 comporte des moyens de fixation qui permettent de le fixer au socle 31 du plancher 3 dans l'une ou l'autre de ses positions d'utilisation. De tels moyens de fixation permettent de rendre le coffre formé par l'élément d'assise 1 inviolable. Ils permettent également d'éviter le retrait de l'élément d'assise 1 en cas de choc, par exemple et assure ainsi la sécurité du passager enfant.

Un exemple d'utilisation du siège selon l'invention va maintenant être décrit en référence aux Figures 1 à 3.

Lorsque l'élément d'assise est dans la première position d'utilisation, l'utilisateur peut s'asseoir sur la surface d'assise 11. Son dos vient en contact avec la paroi arrière 15 et ses jambes dépassent du socle, sous ce dernier, vers la portion du plancher 3 plus basse que le socle 31.

Lorsqu'il n'y a pas de passager, l'élément d'assise peut être disposé dans la seconde position d'utilisation. Pour cela, il suffit de tirer l'élément d'assise 1 vers la portion avant 37 du socle 31 afin de dégager la bordure 19 de la rainure formée dans le dossier 5. L'utilisateur peut alors disposer un bagage ou autre dans le logement accessible par l'ouverture 39. L'élément d'assise est ensuite retourné comme représenté sur la Figure 3 et disposé dans sa seconde position d'utilisation dans laquelle il recouvre le bagage. Dans cette seconde position d'utilisation, l'élément d'assise 1 forme un coffre. Il peut également être utilisé comme rehausseur pour un passager enfant.

Le siège selon l'invention s'avère être particulièrement utile dans un véhicule à moteur électrique dont l'habitacle est particulièrement exigu et qui ne peut pas comporter de coffre pour des raisons d'encombrement.

## Revendications

1. Siège de véhicule automobile comportant un élément d'assise (1) qui présente une surface d'assise (11) et qui est adapté à être monté sur le plancher (3) d'un véhicule automobile, ledit élément d'assise (1) comportant deux flancs latéraux (13) qui sont reliés par ladite surface d'assise (11) et qui comportent chacun un bord libre (17), et où, dans une première position d'utilisation dudit élément d'assise (1), lesdits bords libres (17) sont disposés au-dessus de ladite surface d'assise (11), **caractérisé en ce que** dans une seconde position d'utilisation, lesdits bords libres (17) sont disposés au-dessous de ladite surface d'assise, de manière à surélever ladite surface d'assise (11) par l'intermédiaire desdits flancs latéraux.

2. Siège de véhicule automobile selon la revendication précédente, **caractérisé en ce que** lesdits bords libres (17) sont aptes à coopérer dans ladite première et ladite seconde position avec le bord (38) d'une ouverture (39) ménagée dans ledit plancher (3).

3. Siège de véhicule automobile selon l'une quelconque des revendications précédentes, **caractérisé en ce que** dans ladite seconde position d'utilisation, ledit élément d'assise (1) forme un rehausseur.

4. Siège de véhicule automobile selon la revendication 3, **caractérisé en ce que** ledit élément d'assise (1) comporte une surface d'assise complémentaire (2), disposée en regard de ladite surface d'assise (11) et des moyens de guidage (23, 23') de la sangle d'une ceinture de sécurité.

5. Siège de véhicule automobile selon la revendication 4, **caractérisé en ce que** ledit élément d'assise comporte deux flancs latéraux complémentaires (21) qui s'étendent de part et d'autre de ladite surface d'assise complémentaire (2) et au-dessus de ladite surface d'assise complémentaire (21), lorsque ledit élément d'assise est disposé dans ladite seconde position d'utilisation.

6. Siège de véhicule automobile selon la revendication 5, **caractérisé en ce que** lesdits moyens de guidage sont formés au niveau des flancs latéraux complémentaires.

7. Siège selon l'une quelconque des revendications précédentes, **caractérisé en ce que** ledit élément d'assise (1) comporte une paroi arrière (15), sensiblement perpendiculaire à ladite surface d'assise (11) et formant dossier dans ladite première position d'utilisation.

8. Siège de véhicule automobile selon l'une quelconque des revendications précédentes, **caractérisé en ce qu'**il comporte des moyens de blocage dudit élément d'assise pour bloquer ledit élément d'assise (1) dans l'une ou l'autre de ses positions d'utilisation.

## Patentansprüche

1. Kraftfahrzeugsitz, der ein Sitzpolsterelement (1) aufweist, das eine Sitzfläche (11) hat und das geeignet ist, um auf den Boden (3) eines Kraftfahrzeugs montiert zu werden, wobei das Sitzpolsterelement (1) zwei Seitenflanken (13) aufweist, die durch die Sitzfläche (11) verbunden sind und je einen freien Rand (17) aufweisen, und bei dem in einer ersten Nutzungsstellung des Sitzpolsterelements (1) die freien Ränder (17) über der Sitzfläche (11) angeordnet sind, **dadurch gekennzeichnet, dass** in einer zweiten Nutzungsstellung die freien Ränder (17) unter der Sitzfläche angeordnet sind, um die Sitzfläche (11) mittels der Seitenflanken zu erhöhen.

2. Kraftfahrzeugsitz nach dem vorhergehenden Anspruch, **dadurch gekennzeichnet, dass** die freien Ränder (17) in der ersten und der zweiten Stellung mit dem Rand (38) einer im Boden (3) ausgesparten Öffnung (39) zusammenwirken können.

3. Kraftfahrzeugsitz nach einem der vorhergehenden Ansprüche, **dadurch gekennzeichnet, dass** das Sitzpolsterelement (1) in der zweiten Nutzungsstellung eine Sitzerhöhung formt.

4. Kraftfahrzeugsitz nach Anspruch 3, **dadurch gekennzeichnet, dass** das Sitzpolsterelement (1) eine komplementäre Sitzfläche (2), die gegenüber der Sitzfläche (11) angeordnet ist, und Führungseinrichtungen (23, 23') des Gurts eines Sicherheitsgurts aufweist.

5. Kraftfahrzeugsitz nach Anspruch 4, **dadurch gekennzeichnet, dass** das Sitzpolsterelement zwei komplementäre Seitenflanken (21) aufweist, die sich zu beiden Seiten der komplementären Sitzfläche (2) und über der komplementären Sitzfläche (2) erstrecken, wenn das Sitzpolsterelement in der zweiten Nutzungsstellung angeordnet ist.

6. Kraftfahrzeugsitz nach Anspruch 5, **dadurch gekennzeichnet, dass** die Führungseinrichtungen im Bereich der komplementären Seitenflanken geformt sind.

7. Sitz nach einem der vorhergehenden Ansprüche, **dadurch gekennzeichnet, dass** das Sitzpolsterelement (1) eine Rückwand (15) im Wesentlichen lotrecht zur Sitzfläche (11) aufweist, die in der ersten Nutzungsstellung eine Rückenlehne formt.

8. Kraftfahrzeugsitz nach einem der vorhergehenden Ansprüche, **dadurch gekennzeichnet, dass** er Arretiereinrichtungen des Sitzpolsterelements aufweist, um das Sitzpolsterelement (1) in der einen oder anderen seiner Nutzungsstellungen zu arretieren.

## Claims

1. Motor vehicle seat including a seat portion element (1) which has a seat portion surface (11) and which is adapted to be mounted on the floor (3) of a motor vehicle, the seat portion element (1) including two side flanks (13) which are linked by the seat portion surface (11) and which each have a free edge (17), and wherein, in a first position of use of the seat portion element (1), the free edges (17) are positioned above the seat portion surface (11), **characterized in that**, in a second position of use, the free edges (17) are positioned under the seat portion surface, in such a way that the seat portion surface (11) is raised by means of the side flanks.

2. Motor vehicle seat according to the preceding claim, **characterized in that** the free edges (17) are capable of interacting in the first and second positions with the edge (38) of an opening (39) formed in the floor (3).

3. Motor vehicle seat according to either of the preceding claims, **characterized in that**, in the second position of use, the seat portion element (1) forms a booster seat.

4. Motor vehicle seat according to Claim 3, **characterized in that** the seat portion element (1) includes a complementary seat portion surface (2), positioned facing the seat portion surface (11), and means (23, 23') for guiding the strap of a safety belt.

5. Motor vehicle seat according to Claim 4, **characterized in that** the seat portion element includes two complementary side flanks (21), extending one on each side of the complementary seat portion surface (2) and above the complementary seat portion surface (2) when the seat portion element is placed in the second position of use.

6. Motor vehicle seat according to Claim 5, **characterized in that** the guiding means are formed on the complementary side flanks.

7. Seat according to any one of the preceding claims, **characterized in that** the seat portion element (1) includes a rear wall (15), substantially perpendicular to the seat portion surface (11) and forming a backrest in the first position of use.

8. Motor vehicle seat according to any one of the preceding claims, **characterized in that** it includes means of locking the seat portion element, for locking the seat portion element (1) in one or other of its positions of use.
